# EUROPEAN PATENT APPLICATION

(11) **EP 1 407 658 A1**
(43) Date of publication of application: **14.04.2004**
(21) Application number: 02746089.8
(22) Date of filing: 16.07.2002
(51) Int. Cl.: A01G 1/00, A01G 9/00, A01G 9/02, A01G 7/00, A01G 7/06

(54) **PLANT CULTIVATION SOIL AND ELEVATED CULTIVATION METHOD AND ELEVATED CULTIVATION BED USING THE SAME**

(30) Priority: 17.07.2001 JP 2001216554
(71) Applicant: Okinawa Midori Sangyo Co., Ltd., Ginowan-shi, Okinawa 901-2224 (JP)
(72) Inventor: MIYAJIMA, M.; c/o Okinawa Midori Sangyo Co., Ltd., Ginowan-shi, Okinawa 901-2224 (JP); MIYAJIMA, H.; c/o Okinawa Midori Sangyo Co., Ltd., Ginowan-shi, Okinawa 901-2224 (JP)
(74) Representative: Schaumburg, Thoenes & Thurn
(86) International application number: PCT/JP2002/007211
(87) International publication number: WO 2003/007693

(57) **Abstract**

An elevated cultivation method and elevated cultivation bed (20), using a medium for plant cultivation (15) involving water purification cake (11) and EM ceramic powder (13), and irrigation with activated water obtained after water purification treatment and treatment to reduce the fineness of clusters of water molecules. The cultivation bed (20) does not have any drainage ports. In the elevated cultivation bed (20), a nonwoven fabric sheet 27 which is a protective sheet and a plastic sheet (26) which is nonpermeable sheet are laid on the inside surface of a box-shaped frame (24) comprised of a wire mesh. A plant cultivation medium (15) is filled inside of the box-shaped frame (24). An elevated table (22) of the cultivation bed (20) is an assembled structure comprised of L-angle members (21) fastened by nuts and bolts.

## Description

### TECHNICAL FIELD OF THE INVENTION

The present invention relates to a medium for the cultivation of a crop and an elevated cultivation method using that medium, and in particular it relates to a medium and a method of cultivation using water purification sludge from a water purification plant.

### BACKGROUND ART OF THE INVENTION

Conventionally, crops have been cultivated in the soil. The series of works from growing the seedlings to harvest is mostly performed in bending down from the waist. Further, weeding work is troublesome. To improve these harsh working conditions, elevated cultivation is being performed in some areas.

As an elevated cultivation method, much research has been centered on rock wool cultivation or water cultivation. By such cultivation, it is possible to remarkably improve the overall work environment including the working conditions. However these nutrient solution cultivation systems are extremely costly. These systems are almost all based on chemical fertilizers. No organic cultivation is being performed.

Namely, use of such methods by general farmers is difficult, since careful management of the temperature of the nutrient solution, nutrient concentration, etc. is necessary. Further, if performing elevated cultivation using chemical fertilizers, as with the conventional soil cultivation, repeated crop damage occurs due to the buildup of salts and so on. This is not desirable. Further, in conventional soil cultivation and water cultivation, securing agricultural water supplies has been a major problem.

On the other hand, in conventional elevated cultivation, a special cultivation bed of artificial soil is used, but no cultivation bed suited for elevated cultivation using only a medium aimed at such organic cultivation has been developed.

The objects of the present are to greatly reduce harsh bending from the waist, to enable work to be performed in a comfortable posture, to greatly reduce weeding work and other troublesome work, to greatly reduce the amount of irrigation, to achieve a high growth-rate of the crops, and to achieve elevated organic cultivation.

### DISCLOSURE OF THE INVENTION

A medium for plant cultivation according to the present invention is characterized by comprising a water purification cake having a useful microorganism material mixed in. This water purification cake contains sufficient nutrients as a cultivation medium and is also superior as an environment for the proliferation of useful microorganisms. By mixing a commercially available useful microorganism material, it is possible to cause easy proliferation and to make use of the effect of this promotion of growth by the useful microorganisms for the cultivation of a crop.

The useful microorganism material is EM ceramic powder. Due to this, the medium of the water purification cake is activated, spoilage and deterioration of the medium can be prevented even with excessive irrigation, there is no longer variation in growth, and management becomes extremely easy.

The elevated cultivation method according to the present invention is characterized by filling a cultivation bed of which is set at a position higher than the ground, with a medium for plant cultivation comprising the water purification cake having a useful microorganism material mixed in, and cultivating crops on it. It reduces weeding work. Further, the cultivation bed is set to a position at which it is easy to work, for example it is set to the height of the waist of the worker if the crop is short.

The useful microorganism material is the EM ceramic powder.

Further the elevated cultivation method according to the present invention is characterized by cultivating crops to irrigate with activated water obtained by purification and treatment to reduce the fineness of the clusters of water molecules. This prevents the deterioration of the organic matter in the medium of the water purification cake, prevents spoilage and breakdown, promotes formation of granules, and produces the ideal medium. Furthermore, the nutrients can be easily absorbed by the plants and growth becomes remarkably good.

As described above, according to the elevated cultivation method of the present invention since spoilage and deterioration of the medium can be prevented, the cultivation bed does not need a drainage port. Therefore, there is no problem with environmental pollution due to drainage, fabrication of the elevated cultivation facilities is simplified, and the cost of fabrication is cut.

The elevated cultivation bed according to the present invention is characterized by comprising a box-shaped frame, of which the bottom is provided at a position higher than the ground, defined by a metal wire mesh, a protective sheet and a nonpermeable sheet laid inside the box-shaped frame, and a medium for plant cultivation filled in a space which is defined by the plastic sheet and the nonwoven fabric sheet. This elevated cultivation bed enables the medium to be directly filled, enables the height or size of the bed to be adjusted in accordance with the cultivated crop, and can be assembled easily at a low cost.

Further the box-shaped frame is supported by an elevated table comprised of L-angle members.

### BRIEF DESCRIPTION OF THE DRAWINGS

Fig. 1 is a view of the process of production of a medium for plant cultivation of an embodiment according to the present invention.
Fig. 2 is a view of the process of production of the activated water used for the elevated cultivation method of an embodiment according to the present invention.
Fig. 3 is a perspective view of an embodiment of a cultivation bed.
Fig. 4 is a sectional view along line IV-IV of Fig. 3.
Fig. 5 is a perspective view of an elevated table of the cultivation bed.
Fig. 6 is a perspective view of the cultivation bed broken up.
Fig. 7 is a perspective view of the state at the time of growing seedlings of leeks, using an embodiment of the elevated cultivation method.
Fig. 8 is a perspective view of a home use soil type elevated cultivation bed of another embodiment of the present invention.
Fig. 9 is a view of the process of production of the activated water by a water purifier for continuous purification.

### BEST MODE FOR CARRYING OUT THE INVENTION

An embodiment of the present invention will be described with reference to the drawings.

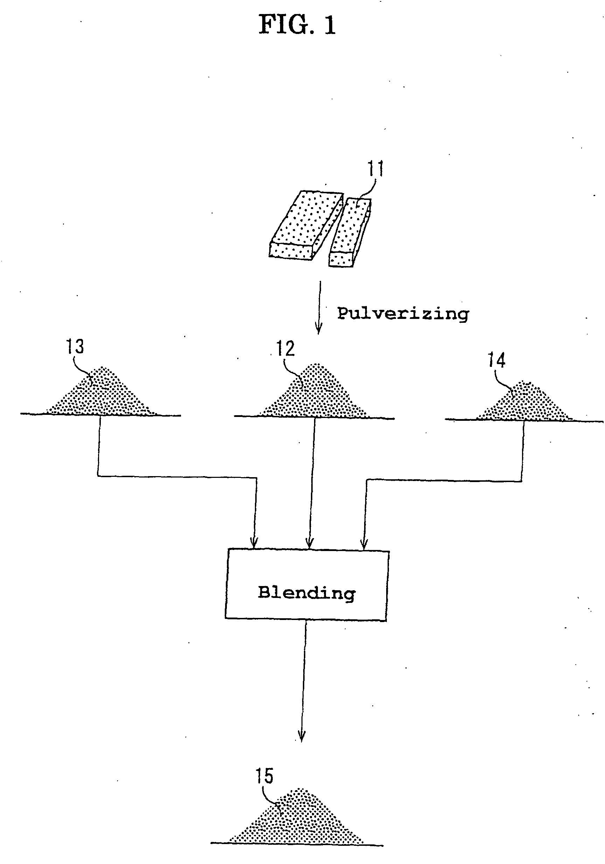

Fig. 1 is a view showing the process of production of a medium for plant cultivation of an embodiment according to the present invention.

Solid water purification cake 11 produced at a water purification plant was pulverized into the granular water purification cake 12. The granular water purification cake 12, which is blended with the compost 13 and EM ceramic powder 14, is mixed sufficiently to obtain the medium 15. The ratios of the compost 13 and EM ceramic powder 14 added to the granular water purification cake 12 are preferably about 10 to 30% of the compost 13 and about 0.01 to 1.0% of the EM ceramic powder 14, for example, and it is possible that 0.2 m³ of compost 13 and 300 g of commercially available EM ceramic powder 14 are blended with 0.8 m³ of the granular water purification cake 12.

For example, the water purification cake 11 is mechanically dehydrated (dehydrated by compression) and hardened water purification sludge produced when purifying raw water in a water purification plant. In general, the sludge processing methods used in water purification plants mainly include chemical injection treatment using lime or polymer flocculants, or non-chemical injection treatment using natural concentration or freeze drying and melting. In this embodiment, it is to use the water purification cake 11 produced by water purification sludge treated with non-chemical injection.

The water purification cake 11 is originally part of the soil of forests, greenlands, farmland, etc. transported together with river water, and is extremely safe and efficient, so it is extremely well suited to the cultivation of crops. Conventionally, almost all of it is disposed of as industrial waste. Just a very small part is used for cultivation of crops. However, in this embodiment, the water purification cake 11 is pulverized and filled in a cultivation bed for cultivation of a crop.

The compost 13 used can be a commercially available compost made from cow dung etc. The EM ceramic powder 14 used can be a commercially available powdered ceramic having an anti-oxidation action.

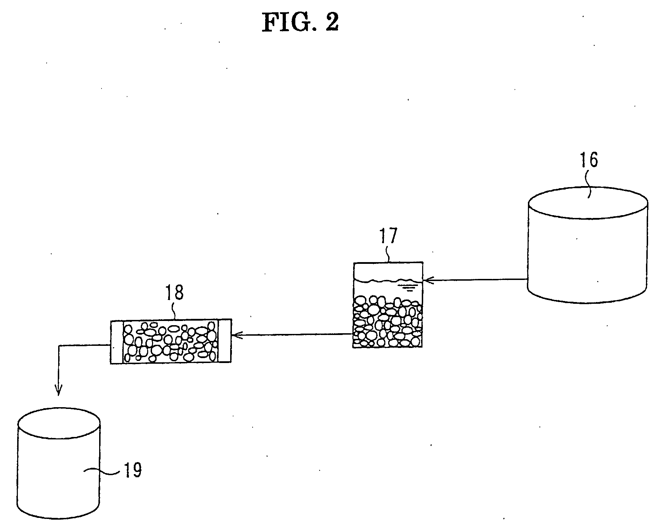

Fig. 2 is a view showing the process of production of the activated water used for elevated cultivation.

Water (for example, rainwater) stored in a rainwater tank 16 is purified through a purifier 17. The purifier 17 comprises purification sand, activated carbon, and so on. The purified water is passed through a cluster treater 18 filled with a magnetic material, ceramic material, and so on, so that the purified water has reduced fineness of clusters of water molecules and is activated. This activated water is stored in a water storage tank 19, and used as irrigation water for elevated cultivation.

The purifier 18 may be any one which can purify rainwater by removing dirt, impurities, bacteria, and so on by filtration or adsorption.

The cluster treater 18 may be any one which reduces the fineness of the clusters of the water molecules. For example, use may be made of infrared ray treatment using a material emitting infrared light such as Bakuhanseki mineral stone, magnetization using a magnetic material such as a magnet, ion exchange using an ion exchange material such as activated carbon or zeolite, and ultrasonic wave treatment, etc.

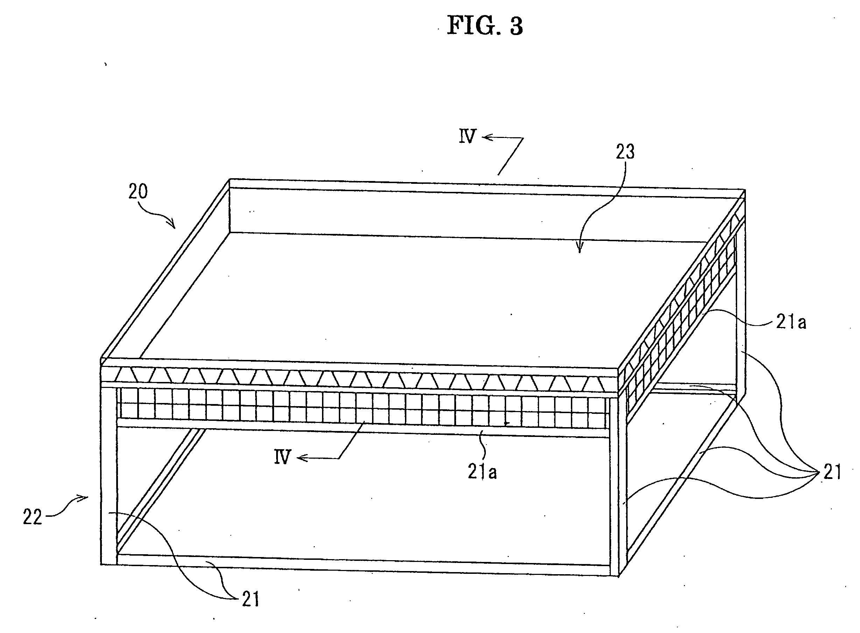

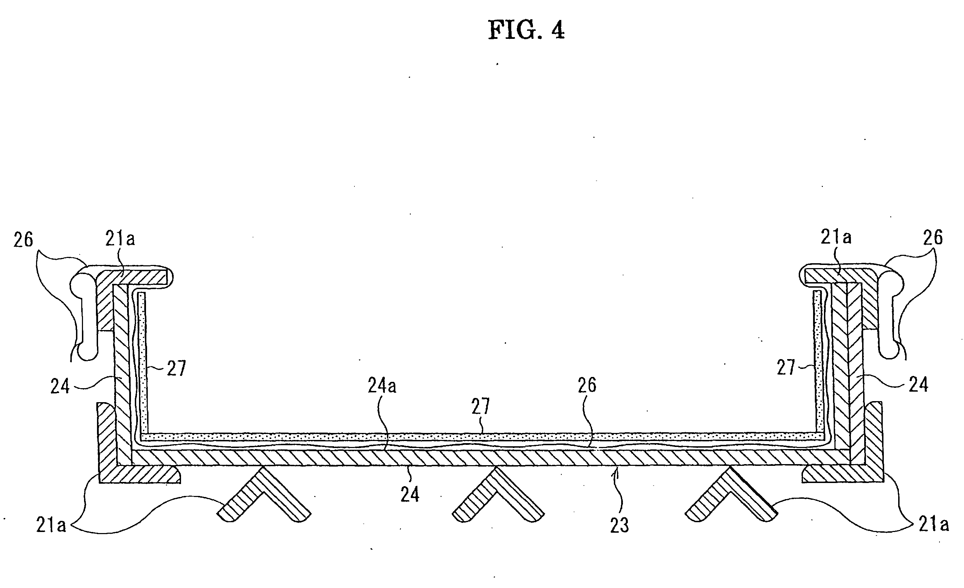

The structure of the cultivation bed will be explained with reference to Figs. 3-5.

The cultivation bed 20 is comprised of a cultivation bed unit 23 set on an elevated table 22. The elevated table 22 is fabricated from L-angle members 21 fastened by nuts and bolts. The cultivation bed unit 23, defined by a metal wire mesh, is comprised of a thin box-shaped frame 24 of which the bottom 24a is provided at a position higher than the ground, and a plastic sheet 26,which is a nonpermeable sheet, and a nonwoven fabric sheet 27, which is a protective sheet, laid inside the box-shaped frame 24.

The L-angle members 21 are preferably formed from a corrosion resistant material. Zinc plated angle members may be used. In these angles members, it is possible to suppress corrosion because of the anti-oxidation action, if the medium which EM ceramic powder is added to is used. The width of these angle members is 10 to 50 mm, preferably 20 to 30 mm. For example if the elevated table is comprised of two types of L-angle members, it is preferable that one has a size of 25 mm x 25 mm and another has a size of 30 mm x 30 mm, and both have a thicknesses of 3 mm.

The material of the wire mesh of the cultivation bed unit 23 is preferably steel, stainless steel, or aluminum. The mesh size can be 1 to 100 mm or so. Preferably it is 100 mm or so. The diameter of the wire can be 0.5 to 5.0 mm or so. Preferably it is 4.0 mm or so.

The plastic sheet 26 is provided at the inside wall of the box-shaped frame 24 so that the medium does not fall out from the wire mesh, and this also prevents irrigation water from leaking out. So it is possible to use any waterproof material which is flexible enough to enable it to be freely bent as the plastic sheet 26.

The nonwoven fabric sheet 27 is laid on the plastic sheet 26. The nonwoven fabric sheet 27 is provided to enable the cultivation medium to be filled on the cultivation bed 20 with and the irrigation water so as to evenly spread over the bottom surface of the bed. Therefore, the nonwoven fabric sheet 27 may be any sheet shaped material which is permeable to water and retains water, and has enough strength to so as to be penetrated by the roots of the planted vegetables etc. For example, a synthetic fiber sheet may be used.

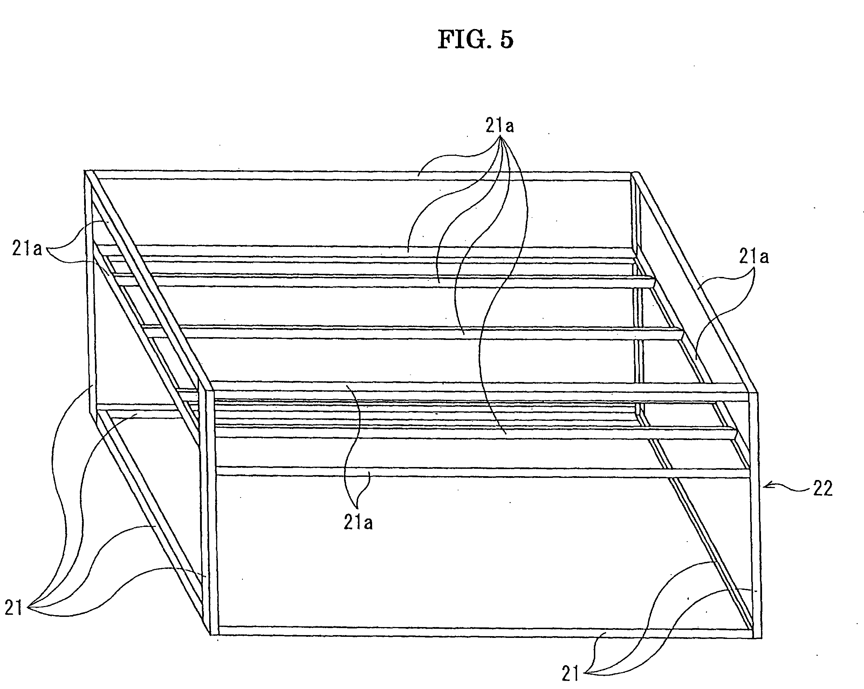

The L-angle members 21 as shown in Fig. 5 are assembled into a rectangular shape, then the top shelf frame 21a for the attachment of the cultivation bed unit 23 is formed on top. The top shelf frame 21a is provided with L-angle members arranged at predetermined intervals.

In the angle members 21, a plurality of holes for fastening nuts and bolts are made to change the mounting position of the top shelf frame 21a so that it is possible to provide a cultivation bed having different depths.

Further, even in the case of changing the height or size of the cultivation bed as a whole, it is possible to change the dimensions by simply replacing the current angle members with predetermined lengths of angle members, and so it is easy to change dimensions for people who are unaccustomed to fabricating the cultivation beds 20 etc.

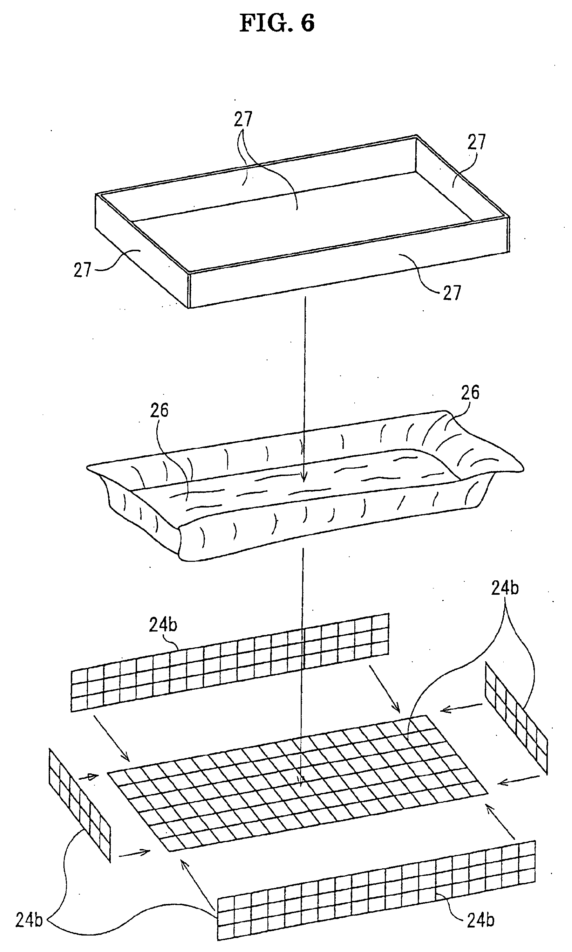

Fig.6 is a perspective view showing the cultivation bed in pieces.

For example, the box-shaped frame 24 is comprised of a steel wire mesh 24b having a mesh size of 100 mm and a wire diameter of 4 mm , cut in accordance with the predetermined length, and set on the top shelf frame 21a of the elevated table 22. The plastic sheet 26, for example, is a transparent plastic sheet, thickness of 0.2 mm, and is laid on the inside surface of the box-shaped frame 24 to form a box shape. The nonwoven fabric sheet 27, for example, consists of polyester, thickness of 1.0 mm, and is bonded along the inside surface of the plastic sheet 26. The plastic sheet 26 and the nonwoven fabric sheet 27 are together bent at their peripheries over the top shelf frame 21a to be simply fastened to the top shelf frame 21a by using plastic sheet fasteners, ((for example, Vinipet) made by Toto Kogyo Co., Ltd.)

It is easy to assemble the cultivation bed unit 23 by using commercially available materials. There is no need to use any special assembly technique or apparatus. Therefore, it is easy to produce the cultivation bed unit 23 and change the size.

In this way, the cultivation bed 20 is the simple, not having a nutrient feeding device or other complicated equipment or a drainage port, but having the cultivation bed unit 23 which is a shallow box. Further, the joined structure of these angle members 21 is an assembled structure using nuts and bolts. Therefore, it is easy to change the height of the bed in any way according to the cultivated crop.

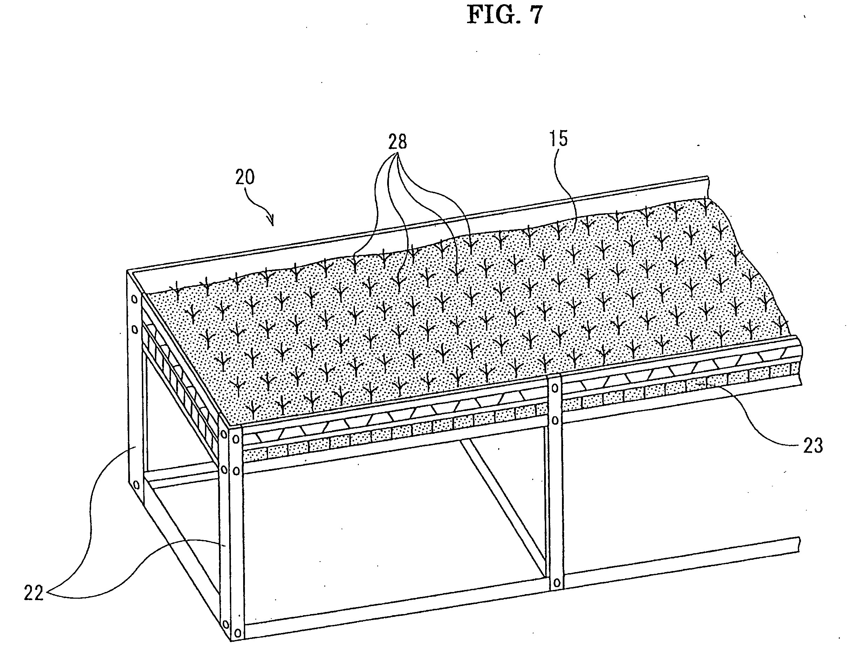

An example of a cultivation that uses the elevated cultivation method for the cultivation of leeks will be explained with reference to Fig. 7. Fig. 7 is a view showing the state at the time of growing seedlings of leeks.

The cultivation bed unit 23 of the cultivation bed 20 has the shallow box-shape, opened at the top, and is not provided with the drainage port. The height of the cultivation bed is adjusted to an easy-to-work height. Here, it was made 70 cm or so. In the cultivation bed unit 23, a space which is defined by the nonwoven fabric sheet 27 and the plastic sheet 26 was filled with a medium 15 using the above water purification cake 11 (shown as Fig.1). The filled height was made 10 cm. The filled medium was planted with seedlings 28 at intervals of about 15 to 20 cm and suitably irrigated with the above activated water explained with reference to Fig. 2.

The leeks could be harvested 45 to 55 days after planting. The plant height at the time of harvesting was about 50 to 60 cm. The state of growth was even for all seedlings 28. This was due to the nutrients of the water purification cake being a type of organic matter that was able to be dissolved by useful microorganisms, making it easier for the leeks to effectively take in the nutrients.

Further, since there was no drainage port, the water due to the irrigation was retained and there were even portions where the medium 25 was immersed in water, but there was no root rot or the like at all.

After harvest, without changing the medium 25 and using a fertilizer containing useful microorganisms as the fertilizer including EM ceramic powder 14, the medium was used again as it was without plowing. Even without plowing, it formed a good medium of aggregated particles.

In this state, the leek seedlings were again planted in the same way as before and similarly irrigated with activated water. No damage due to repeated crops was observed at all. Instead, the state of growth was better from the second crop on.

This was similarly repeated for three to seven crops, and no repeated crop damage was seen. The cultivation bed 20 can be used in a plastic house and temperature control etc. are easy, so it is proper for the cultivation of vegetables and so on.

In soil cultivation, the peripheries of the field receive a lot of sunlight, but the center part receives less sunlight and useless unproductive growth occurs, so in general the plant height is high at the center and low at the peripheries. But In the elevated cultivation method according to the present invention, everything grows uniformly, so even quality can be achieved, and high added value crops can be cultivated.

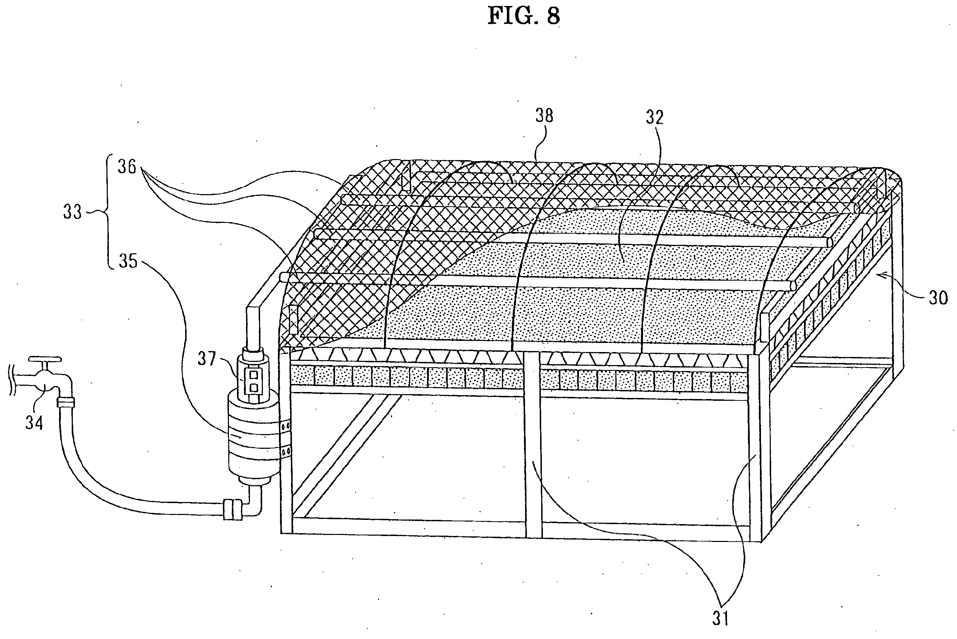

Fig. 8 is a view showing a home use soil type elevated cultivation bed of other embodiment of the present invention.

This elevated cultivation bed is a small-sized elevated cultivation bed able to be placed on a rooftop, balcony, etc. of a general home. The cultivation bed body 30 and the elevated table 31 have the same configuration as the elevated cultivation bed shown in Fig. 3 to Fig. 7, but are smaller in size and lighter in weight. The cultivation medium 32 is the same medium shown in Fig.1. Namely, the cultivation medium 32 is obtained by pulverizing the water purification cake 11 being blended with the compost 13 and EM ceramic powder 14.

An irrigation apparatus 33 is provided in the cultivation bed body 30. The irrigation apparatus 33 is comprised of a small-sized water purification apparatus 35 connected to a faucet 34 for tap water and an irrigation tube 36 for irrigating the purified tap water. The water purification apparatus 35 is connected to the flow regulator 37. It is possible to adjust the amount of irrigation by adjusting the water pressure of the tap water and the flow regulator 37. Further, it is possible to attach a timer etc. to enable a certain amount of irrigation at predetermined times.

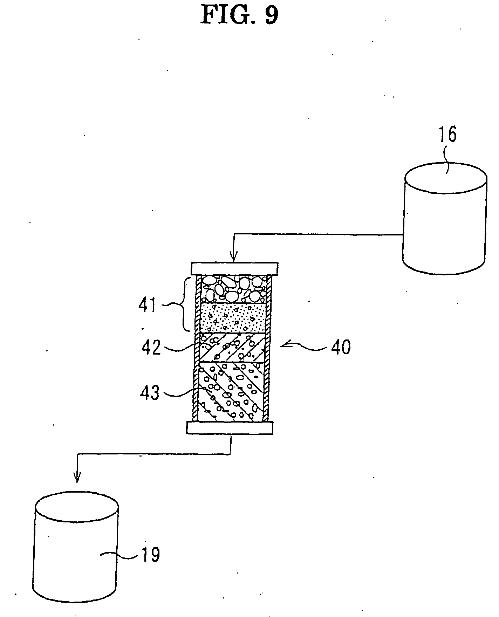

The water purifier 35 can be a water purifier using a water purification material consisting of activated carbon or ceramic etc. For example, it can be made a smaller version of an integral processor 40 shown in Fig. 9. The integral processor 40 is provided with a plurality of filter treatment layers 41 using filter materials such as purification sand etc., purification layers 42 such as activated carbon etc., and cluster reducing layers 43 such as a magnetic material, ceramic material, etc. The integral processor 40 is made integral for continuous purification and cluster fineness reducing treatment.

The irrigation apparatus 33 is any type able to irrigate the cultivation bed. For example, it is possible to place an irrigation tube 36 comprised of plastic pipe provided with sprinkling holes above the cultivation bed 30, across its entire length as shown in Fig. 8, to enable completely even irrigation.

Above the cultivation bed 30, an insect net 38 is provided to keep away insects. This insect net 38 may be a simple insect net for vegetables, available in markets etc.

In this way, the home elevated cultivation bed enables elevated cultivation by simple soil cultivation even on a rooftop, balcony, or such like of a general home. Since the irrigation is with tap water using the irrigation apparatus 33, no difficulty is involved. Further, since the insect net 38 etc. is attached, there is no concern about insect damage and home gardening becomes easy.

In the present invention explained above, there are the following effects.
1) Due to the elevated cultivation by using the cultivation bed of which the bottom is set at a position higher than the ground, work involving bending at the waist and other hard work situations can be improved.
2) There is no need to replace the medium and growth is remarkably improved compared with ordinary soil cultivation.
3) There is no blight, repeated crop damage, or such like and repeated crop cultivation becomes possible.
4) The crop grows completely uniformly, so the product becomes high in quality and there is no waste.
5) Even if water is retained on the cultivation bed due to irrigation, the medium will not spoil or deteriorate, so root rot or other damage hardly ever occurs. Further, since there is no drainage, there is no problem with environmental pollution.
6) Since there is no need for drainage, the amount of irrigation can be greatly reduced and the amount of water used can be cut down to less than one-third of that of ordinary soil cultivation for sufficient cultivation.
7) The cultivation bed is light in weight and simple in assembled structure, so it can be fabricated inexpensively, the structure can be modified in any way in accordance with the cultivated crop, and the structure can be fabricated and modified by a farm worker.
8) The cultivation bed can be made small in size and light in weight. By using an irrigation apparatus using tap water or insect nets etc., it becomes possible for even the general home to easily do home gardening by soil cultivation.

### INDUSTRIAL APPLICABILITY

In this way, the medium for plant cultivation, the elevated cultivation method, and elevated cultivation bed of the present invention are useful for soil cultivation, and especially good for organic cultivation.

## Claims

1. A medium for plant cultivation **characterized by** comprising water purification cake having a useful microorganism material mixed in.

2. A medium for plant cultivation as set forth in claim 1, **characterized in that** said useful microorganism material is an EM ceramic powder.

3. An elevated cultivation method **characterized by** filling a cultivation bed of which the bottom is set at a position higher than the ground, with a medium for plant cultivation comprising water purification cake having a useful microorganism material mixed in.

4. An elevated cultivation method as set forth in claim 3, **characterized in that** said useful microorganism material is an EM ceramic powder.

5. An elevated cultivation method as set forth in claim 3 or 4, **characterized by** irrigation with activated water obtained after purification and treatment to reduce the fineness of clusters of water molecules.

6. An elevated cultivation method as set forth in claim 3 or claim 4, **characterized in that** said cultivation bed does not have any drainage ports.

7. An elevated cultivation bed **characterized by** comprising a box-shaped frame, of which the bottom is set at a position higher than the ground, defined by a metal wire mesh, a protective sheet and a nonpermeable sheet laid inside said box-shaped frame, and a medium for plant cultivation filled in the space defined by said plastic sheet and said nonwoven fabric sheet.

8. An elevated cultivation method as set forth in claim 7, **characterized by** said box-shaped frame being supported by an elevated table fabricated from L-angle members.
